# EUROPÄISCHE PATENTSCHRIFT

(11) **EP 1 076 841 B1**
(45) Veröffentlichungstag und Bekanntmachung des Hinweises auf die Patenterteilung: **26.05.2004**
(21) Anmeldenummer: 99915612.8
(22) Anmeldetag: 15.03.1999
(51) Int. Cl.: G02F 1/15

(54) **Photoelektrochromes Bauelement**
Photoelectrochromic component
Element photoélectrochromique

(30) Priorität: 15.04.1998 DE 19816675
(43) Veröffentlichungstag der Anmeldung: 21.02.2001
(73) Patentinhaber: Fraunhofer-Gesellschaft zur Förderung der angewandten Forschung e.V., 80686 München (DE)
(72) Erfinder: GEORG, Andreas, D-79111 Freiburg (DE)
(74) Vertreter: Pfenning, Meinig & Partner
(86) Internationale Anmeldenummer: PCT/EP1999/001684
(87) Internationale Veröffentlichungsnummer: WO 1999/053372

(56) Entgegenhaltungen:
- WO-A-97/35227
- MONK P M S ET AL: "ELECTROCHROMIC DISPLAY DEVICES OF TUNGSTIC OXIDE CONTAINING VANADIUM OXIDE OR CADMIUM SULPHIDE AS A LIGHT-SENSITIVE LAYER" ELECTROCHIMICA ACTA, Bd. 38, Nr. 18, 1. Dezember 1993 (1993-12-01), Seiten 2759-2764, XP000676410
- BECHINGER C ET AL: "PHOTOELECTROCHROMIC WINDOWS AND DISPLAYS" NATURE, Bd. 383, Nr. 6601, 17. Oktober 1996 (1996-10-17), Seiten 608-610, XP002064353 in der Anmeldung erwähnt
- CHEMICAL ABSTRACTS, vol. 105, no. 4, 28. Juli 1986 (1986-07-28) Columbus, Ohio, US; abstract no. 32889, SVIRIDOV, D. ET AL.: "Spectral sensitization of tungsten trioxide by two dyes separated by a polymer film" XP002109284 & DOKL. AKAD. NAUK BSSR, Bd. 30, Nr. 5, 1986, Seiten 433-435, XP002108473

## Beschreibung

Die Erfindung betrifft ein optisches Bauelement mit einem auf einem ersten Substrat angeordneten und mindestens eine Schicht umfassenden Bereich, der ein reaktives Material, einen Farbstoff und einen Ionenspeicher enthält, wobei im Ionenspeicher mindestens ein Redoxsystem und mindestens ein Ion, welches in das reaktive Material eindringen kann, vorhanden sind.

Es existieren eine Reihe optischer Bauelemente, welche ihre optischen oder elektrischen Eigenschaften reversibel durch Beleuchtung oder externe Beschaltung verändern. Beispielhaft genannt seien elektrochrome Zellen und elektrochrome farbstoffsensibilisierte Solarzellen.

Aus "Photoelectrochromic Windows and Displays", C. Bechinger et al., Nature, Vol. 383, 17. Oktober 1996, S. 608-610, ist eine elektrochemische Zelle mit zwei Elektroden und einem zwischen den Elektroden angeordneten und dissoziiertes LiI enthaltenden Elektrolyten bekannt. Eine der beiden Elektroden besteht aus mit Indium-Zinnoxid (ITO) beschichtetem Glas, auf welches elektrochromes WO₃ als reaktives Material aufgebracht ist, und die andere Elektrode aus nanokristallinem TiO₂, auf welchem eine Farbstoffschicht angeordnet ist.

Die Absorption von einfallendem Licht durch den Farbstoff bewirkt eine Injektion von Elektronen in die als Ladungsträgersammelschicht fungierende TiO₂-Schicht. Der oxidierte Farbstoff wird durch Elektronentransfer von den Jodionen anschließend wieder reduziert. Aufgrund dieses Vorganges bildet sich zwischen den beiden Elektroden eine Potentialdifferenz aus. Werden die Elektroden durch einen äußeren Schaltkreis nunmehr elektrisch leitend verbunden, fließen die in das TiO₂ injizierten Elektronen in die farblose WO₃-Schicht und führen dort zu einer Reduzierung und einer mit der Reduzierung einhergehenden Verfärbung des WO₃. Gleichzeitig mit den Elektronen wandern zur Erhaltung der Ladungsneutralität Lithiumionen aus dem Elektrolyten in das WO₂. Im Gegensatz zu elektrochromen Zellen ist bei diesem Bauelement zur Einfärbung der WO₃-Schicht vorteilhafterweise keine äußere Spannungsquelle erforderlich.

In Abhängigkeit von der Beleuchtungsstärke stellt sich ein Gleichgewichtszustand in diesem Bauelement ein. Wird bei geschlossenem Schaltkreis die Beleuchtung reduziert, so fließen die Elektronen wieder in den Elektrolyten zurück und die Färbung verschwindet. Wird dagegen bei geöffnetem Schaltkreis die Beleuchtung verringert, verbleiben die Elektronen in der WO₃-Schicht und auch die Färbung bleibt über Stunden hinweg erhalten.

Bei diesem elektrochromen Bauelement ist die Entfärbung jedoch nur im unbeleuchteten Zustand möglich. Die Reaktion, die im unbeleuchteten Zustand zur Entfärbung führt, findet notwendigerweise auch während der Einfärbung im beleuchteten Zustand statt. Dadurch wird die Färbereaktion langsamer und die Einfärbung, die sich im Gleichgewicht einstellt, ist geringer, als es ohne die parallele Entfärbereaktion der Fall wäre. Will man eine schnelle Entfärbung, so ist dies nur unter gleichzeitiger Reduzierung der Färbegeschwindigkeit und -tiefe möglich. Nachteilig ist weiterhin, daß auf die äußere Beschaltung nicht verzichtet werden kann und die Funktion derartiger optischer Bauelemente notwendigerweise das Vorhandensein zweier Elektroden voraussetzt.

Aus Monk P.M.S., et al., Electrochimica Acta 38 (18), 2759 - 2764, 1993, ist eine elektrochrome Anzeige bekannt, die die Merkmale des Oberbegriffs von Anspruch 1 aufweist.

Ausgehend von den Nachteilen des Standes der Technik liegt der Erfindung die Aufgabe zugrunde, ein optisches Bauelement zu schaffen, welches eine schnellere und intensivere optisch induzierte Änderung der optischen oder elektrischen Parameter eines schichtförmigen Bereiches erlaubt, und welches darüber hinaus einen einfacheren Aufbau aufweisen kann als vergleichbare optische Bauelemente des Standes der Technik.

Diese Aufgabe wird gelöst durch ein optisches Bauelement nach Anspruch 1. Bevorzugte Ausgestaltungen und Weiterbildungen der Erfindung sind in den Unteransprüchen angegeben.

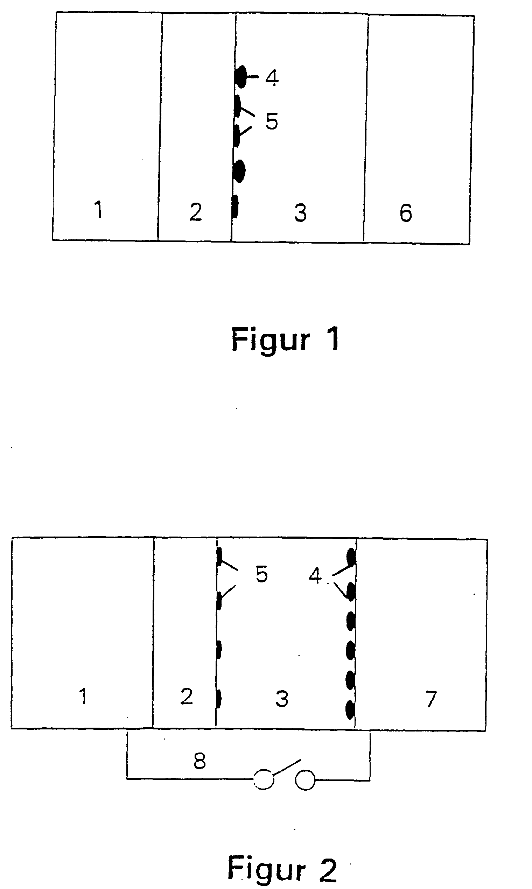

Ein optisches Bauelement, welches ein Substrat und einen darauf angeordneten und mindestens eine Schicht umfassenden Bereich, welcher ein reaktives Material, ein lichtempfindliches Material (nachfolgend Farbstoff genannt), einen Ionenspeicher und einen Katalysator enthält, aufweist, ist einer raschen und intensiven Änderung der Eigenschaften des reaktiven Materiales zugänglich, sofern der Farbstoff mit dem reaktiven Material unmittelbar oder lediglich durch eine elektrisch leitende Schicht getrennt in Verbindung steht. Diese Ausgestaltung des optischen Bauelementes gewährleistet einen unmittelbaren Ladungsträgertransfer zwischen Farbstoff und reaktiver Schicht innerhalb des schichtförmigen Bereiches und ermöglicht den Verzicht auf die im Stand der Technik gelehrten elektrisch leitenden Elektroden und die Beschaltung (Fig. 1). Eine schaltbare Ausgestaltung der Erfindung (Fig. 2) umgeht durch eine vorteilhafte, räumliche Trennung von Färbe- und Entfärbereaktion das gleichzeitige Auftreten von Ein- und Entfärbereaktion, wie sie bei herkömmlichen elektrochromen optischen Bauelementen stattfindet. Dadurch ist die Einfärbung prinzipiell schneller und tiefer ausgeprägt. Weiterhin ermöglicht diese Ausgestaltung im Gegensatz zu herkömmlichen Bauelementen eine schaltbare Entfärbung im beleuchteten Zustand.

Mit jedem vom Farbstoff in das reaktive Material injizierten Ladungsträger wandert zu dessen Kompensation auch ein entgegengesetzt geladenes Ich aus dem Ionenspeicher in das reaktive Material. Im Bereich des ein Redoxsystem enthaltenden Ionenspeichers findet daraufhin zur Erhaltung der Ladungsneutralität des Farbstoffes eine Redoxreaktion statt. Obwohl das erfindungsgemäße optische Bauelement im Vergleich zu den optischen Bauelementen des Standes der Technik einfacher aufgebaut sein kann, da gemäß einem Aspekt der Erfindung insbesondere auf Halbleiterschichten, Elektroden und einen äußeren Stromkreis verzichtet werden kann, erfolgt die erfindungsgemäße optisch induzierte Veränderung der optischen oder elektrischen Parameter des reaktiven Materiales vorteilhafterweise rascher.

Als reaktive Materialien eignen sich solche Stoffe, die aufgrund der vom Farbstoff injizierten Ladungsträger ihre optischen oder elektrischen Eigenschaften, z.B. ihre Leitfähigkeit, verändern. So können beispielsweise elektrochrome Materialien verwendet werden, welche ihre Farbe und zusätzlich gegebenenfalls auch ihre elektrische Eigenschaften aufgrund einer durch die injizierten Ladungsträger induzierten Änderung des Oxidationszustandes verändern. Als Farbstoffe kommen u.a. solche Stoffe in Betracht, wie sie auf dem Gebiet der farbstoffsensibilisierten Solarzellen verwendet werden. Farbstoff und reaktives Material können entweder schichtweise übereinander angeordnet sein oder auch zusammen in einer einzigen Schicht vorliegen. So ist z.B. die Verwendung poröser, etwa durch Sol-Gel-Verfahren hergestellter, Schichten reaktiven Materiales denkbar, bei welchen der Farbstoff in die Poren des reaktiven Materiales eingebettet ist. Die Vermischung von reaktivem Material und Farbstoff führt zu einer weiteren Verbesserung von Ausprägung und Geschwindigkeit der optisch induzierten Änderung der Parameter des reaktiven Materiales.

Als Ionenspeicher eignen sich alle Substanzen, die in der Lage sind, Ionen aufzunehmen und darüber hinaus eine zumindest geringfügige Ionenleitfähigkeit aufweisen. Die Anforderungen an die Ionenleitfähigkeit des Ionenspeichers sind jedoch wesentlich geringer als bei beispielsweise elektrochromen farbstoffsensibilisierten Solarzellen, da in der Regel kein Ionenstrom zwischen zwei Elektroden aufrechterhalten werden muß. Einzig beim Entfärbeprozeß im beleuchteten Zustand bei einer schaltbaren Ausgestaltung (Fig. 2) muß ein Ionenstrom von der linken zur rechten Elektrode durch den gesamten Ionenspeicher fließen. Ansonsten genügt eine lokale Reaktion des Ionenspeichers, z.B. direkt an einer Grenzfläche.

Der Ionenspeicher enthält mindestens ein Ion, welches zur Kompensation der vom Farbstoff injizierten Ladungsträger in das reaktive Material eindringen kann, und weiterhin mindestens ein Redoxsystem, welches die Ladungsneutralität des Farbstoffes und gegebenenfalls auch des Ionenspeichers aufrecht erhält. Der Ionenspeicher kann ebenfalls schichtförmig ausgestaltet sein und beispielsweise auf einer auf das reaktive Material aufgebrachten Farbstoffschicht oder auf einer den Farbstoff und das reaktive Material in Mischung enthaltenden Schicht angeordnet sein. Möglich ist aber auch eine Vermischung von reaktivem Material, Farbstoff und ionenspeichernder Substanz in einer einzigen Schicht. So können die Zwischenräume eines nanokristallinen reaktiven Materiales von einem flüssigen ionenspeichernden Elektrolyten und dem Farbstoff ausgefüllt sein.

Weitere Stoffe wie Ladungsträger aufsammelnde Materialien können zusätzlich einer Schicht des erfindungsgemäßen, mindestens eine Schicht umfassenden Bereiches beigemischt oder als weitere Schicht in diesem Bereich enthalten sein. Derartige Materialien fördern z.B. die Prozeßkinetik oder die Stabilität des Systems. Das die Ladungsträger aufsammelnde Material ist bevorzugt zwischen Farbstoff und reaktiven Material angeordnet und verbessert die Effizienz des Ladungsträgertransfers von Farbstoff in das reaktive Material und damit die Prozeßkinetik.

Unter Beleuchtung stellt sich bei einem erfindungsgemäßen Bauelement ein Gleichgewichtszustand zwischen einer durch die Ladungsträgerinjektion in das reaktive Material induzierten Änderung der optischen, elektrischen oder dieser beiden Eigenschaften des reaktiven Materiales (Hinreaktion) und einer gleichzeitig ablaufenden Rückreaktion ein. Die Rückreaktion (Ladungsträgerrückfluß) kann über den selben Grenzbereich zwischen Farbstoff und reaktivem Material wie die Hinreaktion oder alternativ über eine externe Beschaltung und eine zweite, auf der dem reaktiven Material gegenüberliegenden Seite des Ionenspeichers angeordnete und als Substrat oder Schicht ausgestaltete Elektrode erfolgen. Die externe Beschaltung kann ein beliebiges schaltbares Element enthalten.

Der Gleichgewichtszustand unter Beleuchtung wird interkalierter Zustand genannt, da er u.a. durch die Anzahl der aus dem Ionenspeicher in das reaktive Material eingedrungenen (z.B. interkalierten) Kompensationsionen charakterisiert werden kann. Wird die Beleuchtung reduziert, dominiert die Rückreaktion, welche jedoch kinetisch stark gehemmt sein kann, die Hinreaktion, bis sich wiederum ein Gleichgewichtszustand auf niedrigerem Niveau (deinterkalierter Zustand) eingestellt hat. Wird die Kinetik der Rückreaktion langsam gehalten, läßt sich der interkalierte Zustand über viele Stunden hinweg selbst im Dunkeln halten und das optische Bauelement fungiert als Speicher. Ist dieser Speichereffekt unerwünscht, läßt sich beispielsweise durch Zusätze eines Katalysators die Kinetik der Rückreaktion beschleunigen. Auf die Rückreaktion läßt sich auch durch eine äußere Beschaltung des erfindungsgemäßen Bauelementes Einfluß nehmen.

Weitere Einzelheiten und bevorzugte Ausgestaltungen der Erfindung ergeben sich aus den Figuren und den nachfolgend beschriebenen Ausführungsbeispielen. Es zeigen:
- Fig. 1:: Eine schematische Darstellung eines erfindungsgemäßen optischen Bauelementes ohne externe Beschaltung; und
- Fig. 2:: eine schematische Darstellung eines erfindungsgemäßen optischen Bauelementes mit externer Beschaltung.

Das in Fig. 1 dargestellte optische Bauelement besitzt einen besonderes einfachen Aufbau. Es weist einen auf einem Glassubstrat 1 angeordneten schichtförmigen Bereich auf, der sich aus einer Schicht 2 aus WO₃ (reaktives Material) und einer ionenspeichernden Schicht 3 aus Acetonitril zusammensetzt. Ein anorganischer Farbstoff 5 (cis-bis (isothiocyanato) bis (2,2'-bipyridyl-4,4'-dicarboxylato)-ruthenium(II) "N3"), ist in Form einer transparenten und für Ionen durchlässigen Monolage auf das WO₃ aufgebracht. Das Aufbringen des Farbstoffes 5 kann.durch Benetzung der WO₃-Oberfläche erfolgen. Ein Einbringen des Farbstoffes 5 in die WO₃-Schicht 2 ist für die Funktion des optischen Bauelementes nicht zwingend erforderlich. Optimal ist an der Grenzfläche zwischen reaktivem Material 2 und ionenspeichernder Schicht 3 katalysierendes Platin 4 angeordnet. Die Acetonitrilschicht 3 enthält gelöstes LiI und I₂. Auf der dem reaktiven Material gegenüberliegenden Seite der Acetonitrilschicht 3 ist ein optionales Substrat 6 angeordnet, welches das optische Bauelement vor mechanischen Einflüssen schützt. Mindestens eines der beiden Substrate 1, 6 muß zumindest teilweise im Bereich der Anregungswellenlänge des Farbstoffes 5 transparent sein. Das andere Substrat 1, 6 kann verspiegelt, absorbierend oder ebenfalls transparent sein.

Bei Lichteinfall injiziert der Farbstoff 5 Elektronen in das WO₃, woraufhin zur Erhaltung der Ladungsneutralität der Schicht 2 Lithiumionen aus dem Ionenspeicher 3 in das WO₃ interkalieren. Das transparente WO₃ wird gemäß WO₃ + xLi⁺ + xe⁻ ↔ LiₓWO₃ reduziert und verändert dabei sowohl seine Farbe als auch seine elektrischen Eigenschaften. Zur Erhaltung der Ladungsneutralität des oxidierten Farbstoffes 5 bzw. des Ionenspeichers läuft in der Ionenspeicherschicht 3 die Redoxreaktion 3I⁻ ↔ I⁻₃ + 2e⁻ ab. Die Rückreaktion dieser Redoxreaktion wird durch das Platin 4 katalysiert und die Deinterkalation des Systems bei Reduzierung der Beleuchtung daher beschleunigt.

Zwischen der WO₃-Schicht 2 und dem Farbstoff 5 könnte noch eine nicht dargestellte Schicht eines Aufsammelhalbleiters (z.B. TiO₂) für die vom Farbstoff 5 abgegebenen Elektronen angeordnet werden. Ein an Farbstoff 5 und reaktives Material 2 angepaßtes Halbleitermaterial erhöht die Effizienz der Ladungsträgerinjektion von Farbstoff 5 zu reaktivem Material 2 und damit auch die Reaktionsgeschwindigkeit.

Da das in Fig. 1 dargestellte Bauelement ohne Elektroden und externe Beschaltung auskommt, welche stets einen endlichen elektrischen Widerstand aufweisen, erfolgt die Einfärbung vorteilhafterweise schneller als bei den elektrochromen Bauelementen des Standes der Technik. Insbesondere bei großflächigen Bauelementen erweist sich der Schichtwiderstand transparenter Elektroden nämlich als äußerst nachteilhaft.

Durch Zugabe von Katalysatoren, die die Entfärbereaktion fördern, ist das System in der Ausgestaltung von Fig. 1 in seiner Entfärbegeschwindigkeit verbessert. Dies führt jedoch zu einer Reduzierung der Einfärbegeschwindigkeit und -tiefe. Der erweiterte Aufbau von Fig. 2 umgeht durch räumliche Trennung von Färbe- und Entfärberaktion dieses Problem. In Fig. 2 ist ein schaltbares erfindungsgemäßes optisches Bauelement mit einer äußeren, einen Schalter umfassenden Beschaltung 8 dargestellt. Die als transparente Elektroden ausgebildeten Substrate 1 und 7 bestehen aus mit Fluor dotierten TiO₂ (Pilkington, Schichtwiderstand 30 Ohm) und sind mit der Beschaltung 8 in elektrischem Kontakt. Zwischen den beiden Substraten 1, 7 sind nacheinander eine 1µm dicke WO₃-Schicht 2, eine dünne, den Farbstoff 5 enthaltende Schicht, eine gelöstes LiI und I₂ enthaltende Acetonitril-Ionenspeicherschicht 3 sowie eine auf das Substrat 7 aufgebrachte, 10 nm dicke und Platin 4 enthaltende Schicht angeordnet. Anstatt den Katalysator 4 auf das Substrat 7 aufzubringen könnte der Katalysator 4 auch in das Substrat 7 eingebracht sein oder das Substrat 7 vollständig aus dem Katalysator 4 gefertigt werden. Das Substrat 7 kann erfindungsgemäß sowohl als bevorzugt leitende und einen Katalysator enthaltende Beschichtung als auch als plattenförmiges Element ausgestaltet sein. Die Fläche dieses Bauelementes beträgt rund 5 x 5 cm².

Die Schaltbarkeit des optischen Bauelementes gemäß Fig. 2 beruht darauf, daß an der Arbeitselektrode aus leitfähigem Substrat 1 und WO₃-Schicht 2 das WO₃ gegenüber der Ionenspeicherschicht 3 eine langsame Rückreaktion aufweist, wohingegen diese Rückreaktion an der Gegenelektrode aus leitfähigem Substrat 7 und Platin 4 enthaltender Beschichtung schnell abläuft, da die Redoxreaktion im Ionenspeicher 3 durch das Platin 4 katalysiert wird.

Zwei derartige, baugleiche Zellen wurden parallel in einem Sonnensimulator beleuchtet, wobei bei der ersten Zelle der Schalter geöffnet und bei der zweiten der Schalter geschlossen ist. Bei offener Beschaltung war die Einfärbung wesentlich tiefer als bei geschlossener Beschaltung. Bei beiden Zellen war die Einfärbung größer als im unbeleuchteten Zustand vor Beginn der Beleuchtung. Somit konnte die Schaltbarkeit im beleuchteten Zustand gezeigt werden. In einem zweiten Experiment wurden zwei baugleiche Zellen mit offener Beschaltung beleuchtet. Anschließend wurde die Entfärbung nach Beendigung der Beleuchtung vermessen, wobei bei einer Zelle die Beschaltung geschlossen wurde. Bei beiden Zellen fand eine Entfärbung statt, allerdings bei der Zelle mit offener Beschaltung deutlich langsamer als bei der Zelle mit geschlossener Beschaltung. Somit konnte auch die Schaltbarkeit im unbeleuchteten Zustand nachgewiesen werden.

Alternativ oder zusätzlich zum Schalter kann der äußere Schaltkreis 8 einen regulierbaren Widerstand enthalten, über welchen das Gleichgewicht aus Hin- und Rückreaktion geregelt werden kann. Auf diese Weise sind kontinuierlich einstellbare Interkalationsgrade im beleuchteten Zustand möglich. Eine begrenzte Deinterkalation im unbeleuchteten Zustand ist z.B. durch Begrenzung der Zeit, in der der Schalter geschlossen ist, möglich.

Neben dem in den Ausführungsbeispielen genannten WO₃ eignet sich als reaktives Material 2 beispielsweise auch MoO₃, V₂O₃, NiOₓ oder TiO₂. Alle diese Materialien weisen elektrochrome Eigenschaften auf. Als Ionenspeicher eignen sich sowohl Lösungsmittel wie Propylencarbonat, Acetonitril, Ethylencarbonat/Propylencarbonat, Methoxyprionitril, Glutarodinitril oder N-Methyloxacolidinon als auch Polymere (Polyethylenoxid, Polypropylenoxid) oder anorganische Festkörper (z.B. Metalloxide). Diesen ionenspeichernden Stoffen wird dann zumindest eine Komponente des Redoxsystemes (z.B. I⁻) und das Ion (z.B. Li⁺) zugesetzt. Als Farbstoffe 5 kommen beispielsweise anorganische Halbleiter (TiO₂ oder Si), organische Farbstoffe, anorganische Rutheniumverbindungen, Anthocyanine, Chlorophylle oder Perylenfarbstoffe in Betracht.

Die Substrate können entweder selbst leitend oder leitfähig beschichtet sein. Leitende oder leitfähig beschichtete Substrate können als Elektrode fungieren. Bevorzugte transparente Elektroden bestehen aus Indium-Zinnoxid (ITO), fluor-dotiertem Zinnoxid oder beschichtetem Silber. Als Katalysatoren 4 eignen sich insbesondere Pt, Pd, Ni, Au, Os, Re, Ir, Ru und Rh. Sowohl Substrat als auch Ionenspeicher und Farbstoff sind bevorzugt transparent.

Die Farbstoffschicht kann entweder so dünn sein, daß sie durchscheinend ist, oder der verwendete Farbstoff 5 kann im Ultravioletten absorbieren. In beiden Fällen ist der den Farbstoff 5 enthaltende Bereich als transparent anzusehen.

Die erfindungsgemäßen optischen Bauelemente eignen sich insbesondere als optischer Schalter, optischer Speicher oder als Elemente mit variabler Transmission bzw. Reflexion zum Überhitzungs- oder Blendschutz. Als konkrete Beispiele seien Fenster bzw. Scheiben im Gebäude- oder im Fahrzeugbereich genannt.

## Patentansprüche

1. Optisches Bauelement mit einem auf einem ersten Substrat angeordneten und mindestens eine Schicht umfassenden Bereich, der ein reaktives Material, einen Farbstoff und einen Ionenspeicher enthält, wobei im Ionenspeicher mindestens eine Komponente eines Redoxsystemes und mindestens ein Ion, welches in das reaktive Material eindringen kann, vorhanden sind,
wobei der Farbstoff (5) mit dem reaktiven Material unmittelbar oder über eine leitfähige Schicht in Kontakt ist und ein Ladungsträgertransfer zwischen Farbstoff (5) und reaktivem Material innerhalb des mindestens eine Schicht (2, 3) umfassenden Bereiches erfolgt,
**dadurch gekennzeichnet,**
**dass** der mindestens eine Schicht (2, 3) umfassende Bereich weiterhin einen Katalysator (4) enthält oder der Katalysator als weitere Schicht enthalten ist.

2. Optisches Bauelement nach Anspruch 1, **dadurch gekennzeichnet, daß** eine den Katalysator (4) enthaltende Schicht zwischen der Ionenspeicherschicht (3) und der Schicht (2) des reaktiven Materials angeordnet ist.

3. Optisches Bauelement nach einem der Ansprüche 1 oder 2, **dadurch gekennzeichnet, daß** der mindestens eine Schicht (2, 3) umfassende Bereich eine Schicht (2) des reaktiven Materials und eine darauf angeordnete Ionenspeicherschicht (3) enthält.

4. Optisches Bauelement nach Anspruch 3, **dadurch gekennzeichnet, daß** eine den Farbstoff (5) enthaltende Schicht zwischen der Schicht (2) des reaktiven Materiales und der Ionenspeicherschicht (3) angeordnet ist.

5. Optisches Bauelement nach einem der vorhergehenden Ansprüche, **dadurch gekennzeichnet, daß** der Farbstoff (5) in das reaktive Material eingebettet ist.

6. Optisches Bauelement nach einem der vorhergehenden Ansprüche, **dadurch gekennzeichnet, daß** der mindestens eine Schicht (2, 3) umfassende Bereich eine Schicht, die sowohl das reaktive Material als auch den Farbstoff (5) und den Ionenspeicher enthält, aufweist.

7. Optisches Bauelement nach einem der vorhergehenden Ansprüche, **dadurch gekennzeichnet, daß** das reaktive Material ein elektrochromes Material ist.

8. Optisches Bauelement nach einem der vorhergehenden Ansprüche, **dadurch gekennzeichnet, daß** die leitfähige Schicht eine Halbleiterschicht ist.

9. Optisches Bauelement nach einem der vorhergehenden Ansprüche, **dadurch gekennzeichnet, daß** der mindestens eine Schicht (2, 3) umfassende Bereich zwischen dem ersten Substrat (1) und einem zweiten Substrat (6, 7) angeordnet ist.

10. Optisches Bauelement nach Anspruch 9, **dadurch gekennzeichnet, daß** das zweite Substrat (7) aus einem Katalysator besteht oder einen Katalysator enthält oder mit einer einen Katalysator (4) enthaltenden Beschichtung versehen ist.

11. Optisches Bauelement nach Anspruch 9 oder 10, **dadurch gekennzeichnet, daß** das zweite Substrat (6, 7) als Beschichtung ausgebildet ist.

12. Optisches Bauelement nach einem der Ansprüche 9 bis 11, **dadurch gekennzeichnet, daß** beide Substrate (1, 7) aus einem leitfähigen Material bestehen oder auf einer dem mindestens eine Schicht (2, 3) umfassenden Bereich zugewandten Seite mit einem leitfähigen Material beschichtet sind.

13. Optisches Bauelement nach Anspruch 12, **dadurch gekennzeichnet, daß** eine elektrische Beschaltung (8) vorgesehen ist und die beiden Substrate (1, 7) in elektrischem Kontakt zu der äußeren Beschaltung (8) stehen.

14. Optisches Bauelement nach Anspruch 13, **dadurch gekennzeichnet, daß** die Beschaltung (8) einen Schalter enthält.

15. Optisches Bauelement nach Anspruch 14, **dadurch gekennzeichnet, daß** der Schalter im unbeleuchteten Zustand des optischen Bauelementes zur Kontrolle des Deinterkalationsgrades für begrenzte Zeit schaltbar ist.

16. Optisches Bauelement nach einem der Ansprüche 13 bis 15, **dadurch gekennzeichnet, daß** die Beschaltung (8) einen regulierbaren Widerstand enthält.

17. Optisches Bauelement nach einem der vorhergehenden Ansprüche, **dadurch gekennzeichnet, daß** mindestens eines von erstem Substrat (1) und zweitem Substrat (7) transparent ist.

18. Optisches Baulement nach einem der vorhergehenden Ansprüche, **dadurch gekennzeichnet, daß** der Farbstoff (5) oder die den Farbstoff (5) enthaltende Schicht transparent ist.

19. Verwendung eines optischen Bauelementes nach einem der vorhergehenden Ansprüche als optischer Schalter, optischer Speicher oder als Element mit variabler Transmission oder Reflexion.

## Claims

1. Optical construction element with an area located upon a first substrate and incorporating at least one layer, whereby the same further incorporates a reactive material, a dye, and an ion store, and whereby the ion store further incorporates at least one component of a redox system and at least one ion which can enter the reactive material, whereby the dye (5) is in contact with the reactive material either directly or via a conductive later, and whereby a charge carrier transfer occurs between the dye (5) and the reactive material within the area incorporating at least one layer (2, 3), **characterised in that** the area incorporating at least one layer (2, 3) further incorporates a catalytic converter (4), or **in that** the said catalytic converter is incorporated within a further layer.

2. Optical construction elements according to Claim 1, **characterised in that** a layer incorporating the catalytic converter (4) is located between the ion storage layer (3) and the layer (2) of the reactive material.

3. Optical construction element according to one of the preceding Claims 1 or 2, **characterised in that** the area incorporating at least one layer (2, 3) incorporates a layer (2) of the reactive material and an ion storage layer (3) positioned above the same.

4. Optical construction element according to Claim 3, **characterised in that** a layer incorporating the dye (5) is positioned between the layer (2) incorporating the reactive material and the ion storage layer (3).

5. Optical construction element according to one of the preceding Claims, **characterised in that** the dye (5) is embedded within the reactive material.

6. Optical construction element according to one of the preceding Claims, **characterised in that** the area incorporating at least one layer (2, 3) further incorporates a layer that incorporates the reactive material as well as the dye (5) and the ion store.

7. Optical construction element according to one of the preceding Claims, **characterised in that** the reactive material consists of an electrochrome material.

8. Optical construction element according to one of the preceding Claims, **characterised in that** the conductive layer consists of a semi-conductor layer.

9. Optical construction element according to one of the preceding Claims, **characterised in that** the area incorporating at least one layer (2, 3) is positioned between the first substrate (1) and a second substrate (6, 7).

10. Optical construction element according to Claim 9, **characterised in that** the second substrate (7) consists of a catalytic converter, or **in that** the same incorporates a catalytic converter, or **in that** the same is equipped with a coating incorporating the said catalytic converter (4).

11. Optical construction element according to Claim 9 or 10, **characterised in that** the second substrate (6, 7) takes the form of a coating.

12. Optical construction element according to one of the preceding Claims 9 to 11, **characterised in that** both substrates (1, 7) consist of a conductive material, or **in that** the same are coated with a conductive material on the side that faces in the direction of the area incorporating at least one layer (2, 3).

13. Optical construction element according to Claim 12, **characterised in that** an electric switching means (8) is envisaged, and **in that** both substrates (1, 7) are in electrical contact with the outer switching means (8).

14. Optical construction element according to Claim 13, **characterised in that** the switching means (8) incorporates a switch.

15. Optical construction element according to Claim 14, **characterised in that** the switch is switchable in an unlit condition of the optical construction element for the control of the deintercalation grade for a limited period.

16. Optical construction element according to one of the preceding Claims 13 to 15, **characterised in that** the switching means (8) incorporates a controllable resistor.

17. Optical construction element according to one of the preceding Claims, **characterised in that** at least one of the first (1) and the second (7) substrates is transparent.

18. Optical construction element according to one of the preceding Claims, **characterised in that** the dye (5) or the layer incorporating the dye (5) is transparent.

19. Use of an optical construction element according to one of the preceding Claims as an optical switch, an optical store, or as an element with variable transmission or reflection.

## Revendications

1. Composant optique comportant une partie, qui est disposée sur un premier substrat et comprend au moins une couche contenant un matériau réactif, un colorant et un accumulateur d'ions, dans lequel, dans l'accumulateur d'ions, est présent au moins un constituant d'un système redox et au moins un ion, qui peut pénétrer dans le matériau réactif, et dans lequel le colorant (5) est en contact avec le matériau réactif directement ou par l'intermédiaire d'une couche conductrice et un transfert de porteurs de charges est réalisé entre le colorant (5) et le matériau réactif à l'intérieur de la partie comprenant au moins une couche (2, 3),
**caractérisé en ce que** la partie comprenant au moins une couche (2, 3) contient en outre un catalyseur (4) ou est contenue en tant qu'autre couche.

2. Composant optique selon la revendication 1, **caractérisé en ce qu'**une couche contenant le catalyseur (4) est disposée entre la couche d'accumulation d'ions (3) et la couche (2) du matériau réactif.

3. Composant optique selon l'une des revendications 1 ou 2, **caractérisé en ce que** la partie, qui comprend au moins une couche (2, 3), contient une couche (2) du matériau réactif et une couche d'accumulation d'ions (3) disposée sur cette couche.

4. Composant optique selon la revendication 3, **caractérisé en ce qu'**une couche contenant le colorant (5) est disposée entre la couche (2) du matériau réactif et la couche d'accumulation d'ions (3).

5. Composant optique selon l'une des revendications précédentes, **caractérisé en ce que** le colorant (5) est inséré dans le matériau réactif.

6. Composant optique selon l'une des revendications précédentes, **caractérisé en ce que** la partie comprenant au moins une couche (2, 3) comporte une couche qui contient aussi bien le matériau réactif que le colorant (5) et l'accumulateur d'ions.

7. Composant optique selon l'une des revendications précédentes, **caractérisé en ce que** le matériau réactif est un matériau à effet d'électrochrome.

8. Composant optique selon l'une des revendications précédentes, **caractérisé en ce que** la couche conductrice est une couche semiconductrice.

9. Composant optique selon l'une des revendications précédentes, **caractérisé en ce que** la partie comprenant au moins une couche (2, 3) est disposée entre le premier substrat (1) et un second substrat (6, 7).

10. Composant optique selon la revendication 9, **caractérisé en ce que** le second substrat (7) est constitué par un catalyseur ou contient un catalyseur ou est pourvu d'un revêtement contenant un catalyseur (4).

11. Composant optique selon la revendication 9 ou 10, **caractérisé en ce que** le second substrat (6, 7) est agencé en tant que revêtement.

12. Composant optique selon l'une des revendications 9 à 11, **caractérisé en ce que** les deux substrats (1, 7) sont réalisés en un matériau conducteur ou sont disposés sur un côté associé à la partie qui comporte une couche (2, 3) et comportant un matériau conducteur.

13. Composant optique selon la revendication 12, **caractérisé en ce qu'**il est prévu un câblage électrique (8) et que les deux substrats (1, 7) sont placés en contact électrique avec le câblage extérieur (8).

14. Composant optique selon la revendication 13, **caractérisé en ce que** le câblage (8) contient un commutateur.

15. Composant optique selon la revendication 14, **caractérisé en ce que** le commutateur peut être connecté, lorsque le composant optique est dans un état non éclairé, pour le contrôle du degré de désintercalation, et ce pendant une durée limitée.

16. Composant optique selon l'une des revendications 13 à 15, **caractérisé en ce que** le câblage (8) contient une résistance réglable.

17. Composant optique selon l'une des revendications précédentes, **caractérisé en ce que** qu'au moins l'un du premier substrat (1) et du second substrat (7) est transparent.

18. Composant optique selon l'une des revendications précédentes, **caractérisé en ce que** le colorant (5) ou la couche contenant le colorant (5) est transparent.

19. Utilisation d'un composant optique selon l'une des revendications précédentes en tant que commutateur optique, accumulateur optique ou en tant qu'élément ayant une transmission ou une réflexion variable.
